# EUROPEAN PATENT SPECIFICATION

(11) **EP 4 502 484 B1**
(45) Date of publication and mention of the grant of the patent: **16.09.2026**
(21) Application number: 23780239.2
(22) Date of filing: 24.03.2023
(51) Int. Cl.: G05B 15/02, F24F 11/64, F24F 110/00, F24F 110/12, G05B 13/04, F24F 11/46, F24F 11/62, F24F 11/63, G06N 20/00, F24F 11/30

(54) **THERMAL LOAD PREDICTION SYSTEM**
SYSTEM ZUR VORHERSAGE DER THERMISCHEN BELASTUNG
SYSTÈME DE PRÉDICTION DE CHARGE THERMIQUE

(30) Priority: 31.03.2022 JP 2022060703
(43) Date of publication of application: 05.02.2025
(73) Proprietor: DAIKIN INDUSTRIES, LTD., Osaka-shi, Osaka 530-0001 (JP)
(72) Inventor: YOSHIDA, Kotaro, Osaka-shi, Osaka 530-001 (JP); NISHIMURA, Tadafumi, Osaka-shi, Osaka 530-001 (JP); YURA, Yoshinori, Osaka-shi, Osaka 530-001 (JP); MATSUI, Nobuki, Osaka-shi, Osaka 530-001 (JP); OKAMOTO, Masakazu, Osaka-shi, Osaka 530-001 (JP)
(74) Representative: Global IP Europe Patentanwaltskanzlei
(86) International application number: PCT/JP2023/011975
(87) International publication number: WO 2023/190229

(56) References cited:
- WO-A1-2020/261317
- CN-A- 111 932 015
- DE-T5- 112022 006 091
- JP-A- 2001 344 294
- JP-A- 2002 257 399
- JP-A- 2015 001 346
- JP-A- 2019 086 243
- JP-A- 2020 139 705
- JP-A- H0 526 501
- JP-B2- 5 572 799
- KR-A- 20210 063 968
- US-A1- 2021 302 044
- XUAN ZHOU ET AL: "Comparison of four algorithms based on machine learning for cooling load forecasting of large-scale shopping mall", ENERGY PROCEDIA, ELSEVIER, NL, vol. 142, 31 January 2018 (2018-01-31), pages 1799 - 1804, XP085335086, ISSN: 1876-6102, DOI: 10.1016/J.EGYPRO.2017.12.566

## Description

### TECHNICAL FIELD

The present disclosure relates to a thermal load prediction system.

### BACKGROUND ART

As disclosed in PTL 1 (Japanese Patent No. 5572799), there is a technique of learning and predicting a thermal load in a building.

WO 2020/261317 A1, US 2021/302044 A1, and JP 5 572799 B2 each disclose a thermal load prediction system configured to predict a thermal load of an air-conditioning zone in a building, the thermal load prediction system comprising: an environmental data acquisition unit configured to acquire external environmental data related to an environment outside the building and/or internal environmental data related to an environment inside the building, both of which affect the thermal load of the air-conditioning zone; an operation data acquisition unit configured to acquire operation data of an air conditioner configured to perform air conditioning for the air-conditioning zone; a storage unit configured to store the data acquired by the environmental data acquisition unit and the operation data acquisition unit; a learning unit configured to train a model with which the thermal load of the air-conditioning zone is predicted by using learning data obtained from the storage unit; and a prediction unit configured to predict the thermal load of the air-conditioning zone by using the model, wherein an indoor unit forming the air conditioner is installed in the air-conditioning zone, the thermal load of the air-conditioning zone in the learning data is calculated based on a heat exchange amount in the indoor unit installed in the air-conditioning zone, and the heat exchange amount in the indoor unit is calculated based on the operation data.

JP 2015 001346 A relates to a method for controlling the operation of a system such as an air-conditioning system and discloses a process to calculate a heat exchange amount of in an indoor unit of the air-conditioning system based on a heat exchange coefficient, a flow rate of refrigerant in an outdoor unit, a heat exchange coefficient in the outdoor unit, an indoor temperature which is a temperature of a circulating air in a room to be air-conditioned, a refrigerated water outlet temperature, and an error.

### SUMMARY OF INVENTION

### Technical Problem

When the thermal load is learned for each outdoor unit as described in PTL 1, there is a problem in that it is difficult to predict the thermal load for each air-conditioning zone. Solution to Problem

The object above is achieved by the thermal load prediction system defined by the appended claim 1. Further advantageous effects can be obtained by the preferred embodiments defined by appended dependent claims.

A thermal load prediction system as a first reference example predicts a thermal load of an air-conditioning zone in a building. The thermal load prediction system includes an environmental data acquisition unit, an operation data acquisition unit, a storage unit, a learning unit, and a prediction unit. The environmental data acquisition unit acquires external environmental data related to the environment outside the building and/or internal environmental data related to the environment inside the building, both of which affect the thermal load of the air-conditioning zone. The operation data acquisition unit acquires operation data of an air conditioner configured to perform air conditioning for the air-conditioning zone. The storage unit stores the data acquired by the environmental data acquisition unit and the operation data acquisition unit. The learning unit trains a model for predicting the thermal load of the air-conditioning zone using learning data obtained from the storage unit. The prediction unit predicts the thermal load of the air-conditioning zone by using the model. An indoor unit forming the air conditioner is installed in the air-conditioning zone. The thermal load of the air-conditioning zone in the learning data is calculated based on a heat exchange amount in the indoor unit installed in the air-conditioning zone. The heat exchange amount in the indoor unit is calculated based on the operation data.

In the thermal load prediction system as the first reference example, the learning unit trains the model for predicting the thermal load of the air-conditioning zone using the learning data obtained from the storage unit. The prediction unit predicts the thermal load of the air-conditioning zone by using the model. The thermal load of the air-conditioning zone in the learning data is calculated based on a heat exchange amount in the indoor unit installed in the air-conditioning zone. As a result, the thermal load prediction system can learn and predict the thermal load for each air-conditioning zone.

A thermal load prediction system as a second reference example is the thermal load prediction system according to the first reference example, in which the external environmental data includes at least an outside air temperature of the building. The internal environmental data includes at least the indoor temperature of the air-conditioning zone.

A thermal load prediction system as a third reference example is the thermal load prediction system according to the first reference example or the second reference example, in which the learning unit excludes a record including a missing value or an abnormal value from the learning data before training the model.

A thermal load prediction system as a fourth reference example is the thermal load prediction system according to the first reference example or the second reference example, in which the learning unit complements a missing value or an abnormal value included in the learning data before training the model.

A thermal load prediction system as a fifth reference example is the thermal load prediction system according to any one of the first reference example to the fourth reference example, in which the learning unit processes the learning data based on an operating state of the air conditioner or a schedule of the air conditioner before training the model.

The thermal load prediction system of the fifth reference example can improve the accuracy of the model for predicting the thermal load of the air-conditioning zone by excluding data that is weakly related to the thermal load of the air-conditioning zone based on the operating state of the air conditioner or the schedule of the air conditioner.

A thermal load prediction system as a sixth reference example is the thermal load prediction system according to any one of the first reference example to the fifth reference example, in which the learning unit uses second learning data for a second air-conditioning zone similar to a first air-conditioning zone, instead of first learning data for the first air-conditioning zone.

With such a configuration, the thermal load prediction system as the sixth reference example can use common learning data for similar air-conditioning zones.

A thermal load prediction system as a seventh reference example is the thermal load prediction system according to any one of the first reference example to the sixth reference example, in which the model is a machine learning model, a statistical model, a physical model, or a combination of these.

A thermal load prediction system as an eighth reference example is the thermal load prediction system according to any one of the first reference example to the seventh reference example, in which the learning unit trains the model using learning data of a predetermined unit.

A thermal load prediction system as a ninth reference example is the thermal load prediction system according to any one of the first reference example to the eighth reference example, in which the learning unit updates the model at a predetermined timing.

A thermal load prediction system as a tenth reference example is the thermal load prediction system according to any one of the first reference example to the ninth reference example, in which the heat exchange amount in the indoor unit is calculated based on a suction temperature, an air volume, and a refrigerant temperature in the indoor unit.

A thermal load prediction system as an eleventh reference example is the thermal load prediction system according to any one of the first reference example to the ninth reference example, wherein the heat exchange amount in the indoor unit is calculated based on a suction temperature, a blow-out temperature, and an air volume in the indoor unit.

### BRIEF DESCRIPTION OF DRAWINGS

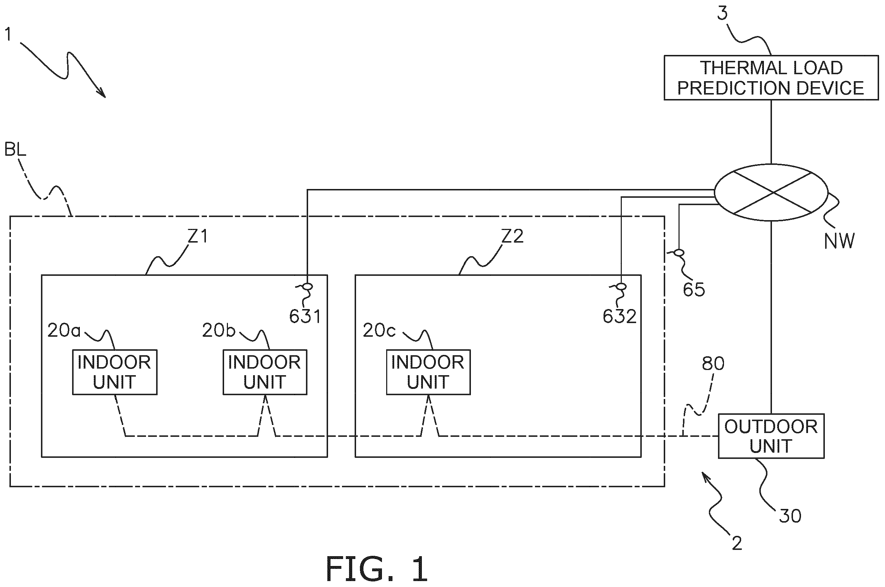

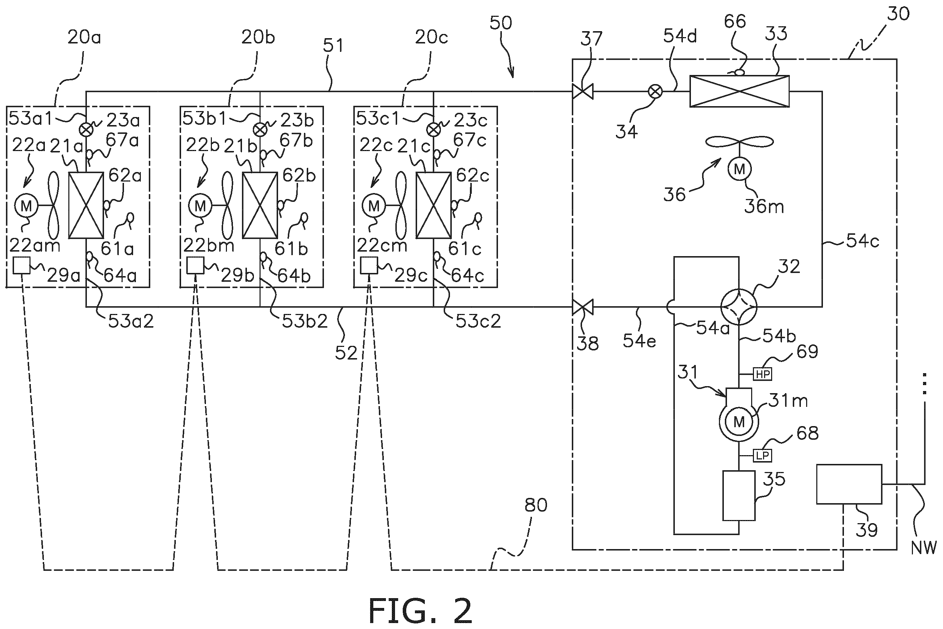

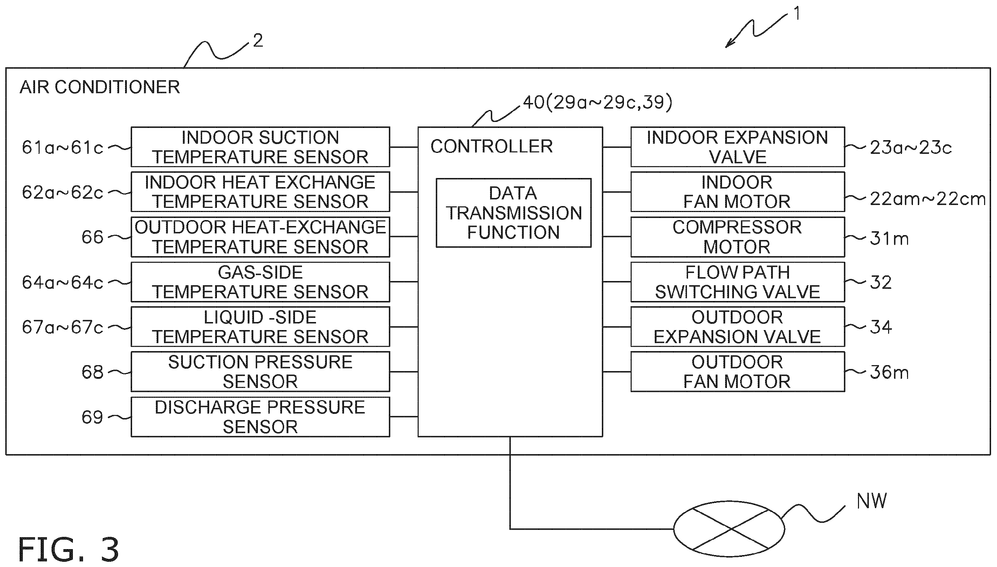

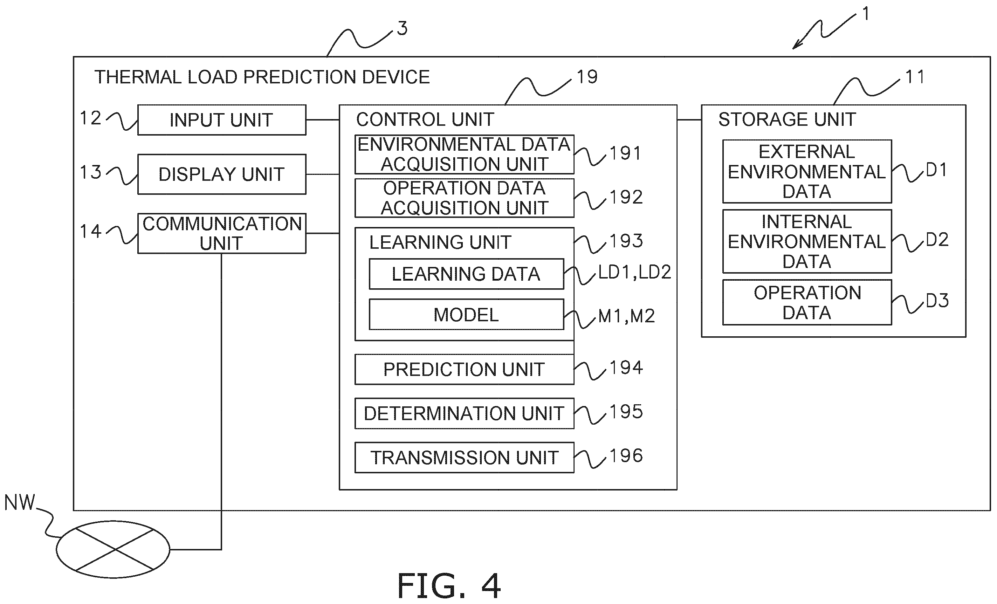

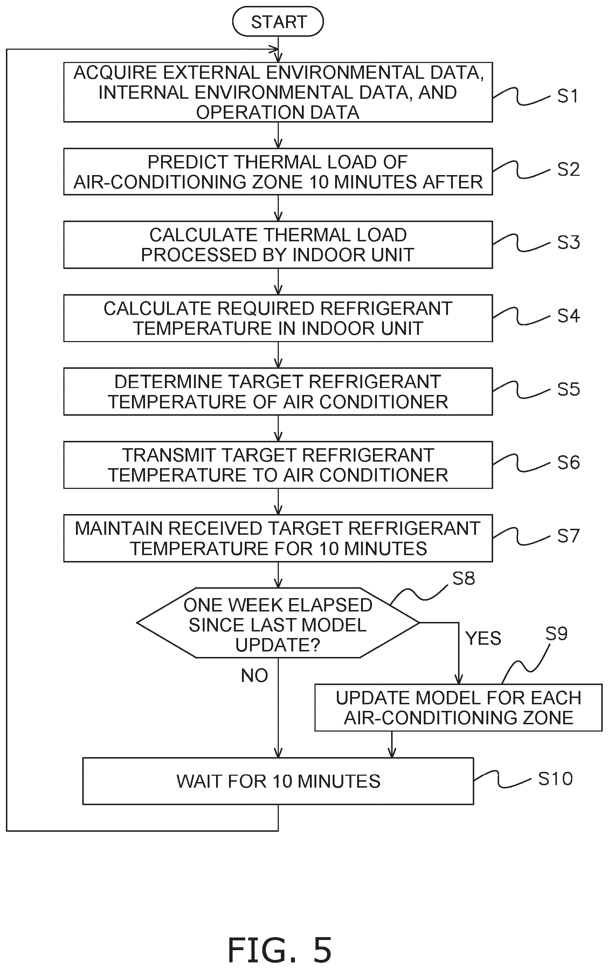

<Fig. 1> Fig. 1 is a schematic configuration diagram of a thermal load prediction system.
<Fig. 2> Fig. 2 is a diagram illustrating a refrigerant circuit of the air conditioner.
<Fig. 3> Fig. 3 is a control block diagram of the air conditioner.
<Fig. 4> Fig. 4 is a control block diagram of the thermal load prediction device.
<Fig. 5> Fig. 5 is a flowchart for explaining processing executed by the thermal load prediction system.

### DESCRIPTION OF EMBODIMENTS

### (1) Overall configuration

The thermal load prediction system 1 is a system that predicts thermal loads of air-conditioning zones Z1 and Z2 in a building BL. Fig. 1 is a schematic configuration diagram of the thermal load prediction system 1. As illustrated in Fig. 1, the thermal load prediction system 1 includes an air conditioner 2 and a thermal load prediction device 3. The air conditioner 2 and the thermal load prediction device 3 are communicably connected via a network NW. The network NW is, for example, the Internet.

The air conditioner 2 forms a vapor compression refrigeration cycle and performs air conditioning for the air-conditioning zones Z1 and Z2 in the building BL. In the present embodiment, the air conditioner 2 is a so-called multi-type air conditioning system for a building. As illustrated in Fig. 1, the air conditioner 2 includes indoor units 20a to 20c and an outdoor unit 30. The indoor units 20a and 20b are installed in the air-conditioning zone Z1. The indoor unit 20c is installed in the air-conditioning zone Z2. The indoor units 20a to 20c and the outdoor unit 30 are communicably connected via a communication line 80. Fig. 2 is a diagram illustrating a refrigerant circuit 50 of the air conditioner 2. As illustrating in Fig. 2, the indoor units 20a to 20c and the outdoor unit 30 are connected by a liquid refrigerant connection pipe 51 and a gas refrigerant connection pipe 52 to form the refrigerant circuit 50.

The thermal load prediction device 3 predicts the thermal loads of the air-conditioning zones Z1 and Z2 based on various types of data acquired from the air conditioner 2 and the like.

As illustrated in Fig. 1, indoor temperature sensors 631 and 632 for measuring the indoor temperatures of the air-conditioning zones Z1 and Z2 are installed in the air-conditioning zones Z1 and Z2. An outdoor temperature sensor 65 for measuring the outside air temperature of the building BL is installed outside the building BL. The thermal load prediction device 3, the indoor temperature sensors 631 and 632, and the outdoor temperature sensor 65 are communicably connected via the network NW.

### (2) Detailed configuration

### (2-1) Indoor unit

In the present embodiment, the indoor units 20a to 20c are ceiling-embedded units installed in the ceilings. As illustrated in Fig. 2, the indoor units 20a to 20c mainly include indoor heat exchangers 21a to 21c, indoor fans 22a to 22c, indoor expansion valves 23a to 23c, indoor control units 29a to 29c, indoor suction temperature sensors 61a to 61c, indoor heat exchange temperature sensors 62a to 62c, gas-side temperature sensors 64a to 64c, and liquid-side temperature sensors 67a to 67c. Further, as illustrated in Fig. 2, the indoor units 20a to 20c include liquid refrigerant pipes 53a1 to 53c1 that connect the liquid-side ends of the indoor heat exchangers 21a to 21c and the liquid refrigerant connection pipe 51. Further, the indoor units 20a to 20c include gas refrigerant pipes 53a2 to 53c2 connecting the gas-side ends of the indoor heat exchangers 21a to 21c and the gas refrigerant connection pipe 52.

### (2-1-1) Indoor heat exchanger

The indoor heat exchangers 21a to 21c implement heat exchange between the refrigerant flowing through the indoor heat exchangers 21a to 21c and the air in the air-conditioning zones Z1 and Z2. The indoor heat exchangers 21a to 21c are, for example, fin-and-tube type heat exchangers including a plurality of heat transfer fins and a plurality of heat transfer tubes. As illustrated in Fig. 2, one ends of the indoor heat exchangers 21a to 21c are connected to the liquid refrigerant connection pipe 51 via the liquid refrigerant pipes 53a1 to 53c1. The other ends of the indoor heat exchangers 21a to 21c are connected to the gas refrigerant connection pipe 52 via the gas refrigerant pipes 53a2 to 53c2. During the cooling operation, the refrigerant flows into the indoor heat exchangers 21a to 21c from the liquid refrigerant pipes 53a1 to 53c1, and the indoor heat exchangers 21a to 21c function as evaporators for the refrigerant. During the heating operation, the refrigerant flows into the indoor heat exchangers 21a to 21c from the gas refrigerant pipes 53a2 to 53c2, and the indoor heat exchangers 21a to 21c function as condensers for the refrigerant. Note that, in the present embodiment, the indoor heat exchangers 21a to 21c are fin-and-tube heat exchangers, but are not limited thereto, and may be other types of heat exchangers.

### (2-1-2) Indoor fan

In the present embodiment, the indoor units 20a to 20c include the indoor fans 22a to 22c as blowers for sucking indoor air into the unit, and then supplying the air, after exchanging heat with the refrigerant in the indoor heat exchangers 21a to 21c, into the room as supplied air. The indoor fans 22a to 22c are fans that supply air in the air-conditioning zones Z1 and Z2 to the indoor heat exchangers 21a to 21c. The indoor fans 22a to 22c are, for example, centrifugal fans such as turbo fans or sirocco fans. As illustrated in Fig. 2, the indoor fans 22a to 22c are driven by indoor fan motors 22am to 22cm including DC fan motors and the like. The number of rotations of the indoor fan motors 22am to 22cm can be controlled by inverters.

### (2-1-3) Indoor expansion valve

The indoor expansion valves 23a to 23c are mechanisms for adjusting pressures and flow rates of the refrigerant flowing through the liquid refrigerant pipes 53a1 to 53c1. The indoor expansion valves 23a to 23c are provided in the liquid refrigerant pipes 53a1 to 53c1. In the present embodiment, the indoor expansion valves 23a to 23c are electronic expansion valves whose opening degree is adjustable. In the present embodiment, the indoor expansion valves 23a to 23c are provided as expansion mechanisms in the indoor units 20a to 20c, respectively. However, the present invention is not limited thereto, and the expansion mechanisms (including the expansion valves) may be provided in the outdoor unit 30, or may be provided in connection units independent of the indoor units 20a to 20c and the outdoor unit 30.

### (2-1-4) Sensor

The indoor suction temperature sensors 61a to 61c measure the temperature of the air sucked by the indoor units 20a to 20c (indoor suction temperature). The indoor suction temperature sensors 61a to 61c are provided near the air suction ports of the indoor units 20a to 20c.

The indoor heat exchange temperature sensors 62a to 62c measure the temperature (indoor saturation temperature) of the refrigerant flowing through the indoor heat exchangers 21a to 21c. The indoor saturation temperature during the cooling operation is an evaporation temperature (indoor evaporation temperature) of the refrigerant flowing through the indoor heat exchangers 21a to 21c. The indoor saturation temperature during the heating operation is a condensation temperature (indoor condensation temperature) of the refrigerant flowing through the indoor heat exchangers 21a to 21c. The indoor heat exchange temperature sensors 62a to 62c are provided in the indoor heat exchangers 21a to 21c.

The gas-side temperature sensors 64a to 64c measure the temperature (indoor gas-side temperature) of the refrigerant flowing through the gas refrigerant pipes 53a2 to 53c2. The gas-side temperature sensors 64a to 64c are provided in the gas refrigerant pipes 53a2 to 53c2.

The liquid-side temperature sensors 67a to 67c measure the temperature (indoor liquid-side temperature) of the refrigerant flowing through the liquid refrigerant pipes 53a1 to 53c1. The liquid-side temperature sensors 67a to 67c are provided in the liquid refrigerant pipes 53a1 to 53c1.

### (2-1-5) Indoor control unit

The indoor control units 29a to 29c control operations of each of units forming the indoor units 20a to 20c.

The indoor control units 29a to 29c are electrically connected to various devices included in the indoor units 20a to 20c, including the indoor expansion valves 23a to 23c and the indoor fan motors 22am to 22cm. In addition, the indoor control units 29a to 29c are communicably connected to various sensors provided in the indoor units 20a to 20c, including the indoor suction temperature sensors 61a to 61c, the indoor heat exchange temperature sensors 62a to 62c, the gas-side temperature sensors 64a to 64c, and the liquid-side temperature sensors 67a to 67c.

The indoor control units 29a to 29c include a control calculation device and a storage device. The control calculation device is a processor such as a CPU or a GPU. The storage device is a storage medium such as a RAM, a ROM, or a flash memory. The control calculation device reads the program stored in the storage device and executes predetermined calculation processing in accordance with the program, thereby controlling the operation of each of the units forming the indoor units 20a to 20c. In addition, the control calculation device can write calculation results to the storage device and read information stored in the storage device in accordance with the program. The indoor control units 29a to 29c include a timer.

The indoor control units 29a to 29c are configured to be capable of receiving various signals transmitted from an operation remote controller (not illustrated). The various signals include, for example, signals for instructing operation start and stop, and signals related to various settings. The signals related to various settings include, for example, signals related to set temperature and air volume. The indoor control units 29a to 29c exchange control signals, measurement signals, signals related to various settings, and the like with an outdoor control unit 39 of the outdoor unit 30 via the communication line 80. The indoor control units 29a to 29c and the outdoor control unit 39 cooperate to function as a controller 40. The function of the controller 40 will be described below.

### (2-2) Outdoor unit

The outdoor unit 30 is installed outside the building BL, such as on the roof of the building BL. As illustrated in Fig. 2, the outdoor unit 30 mainly includes a compressor 31, a flow path switching valve 32, an outdoor heat exchanger 33, an outdoor expansion valve 34, an accumulator 35, an outdoor fan 36, a liquid-side shutoff valve 37, a gas-side shutoff valve 38, the outdoor control unit 39, an outdoor heat-exchange temperature sensor 66, a suction pressure sensor 68, and a discharge pressure sensor 69. The outdoor unit 30 includes a suction pipe 54a, a discharge pipe 54b, gas refrigerant pipes 54c and 54e, and a liquid refrigerant pipe 54d.

The suction pipe 54a connects the flow path switching valve 32 and the suction side of the compressor 31. The suction pipe 54a is provided with the accumulator 35. The discharge pipe 54b connects the discharge side of the compressor 31 and the flow path switching valve 32. The gas refrigerant pipe 54c connects the flow path switching valve 32 and the gas side of the outdoor heat exchanger 33. The liquid refrigerant pipe 54d connects the liquid side of the outdoor heat exchanger 33 and the liquid refrigerant connection pipe 51. The liquid refrigerant pipe 54d is provided with the outdoor expansion valve 34. The liquid-side shutoff valve 37 is provided at a connecting portion between the liquid refrigerant pipe 54d and the liquid refrigerant connection pipe 51. The gas refrigerant pipe 54e connects the flow path switching valve 32 and the gas refrigerant connection pipe 52. The gas-side shutoff valve 38 is provided at a connecting portion between the gas refrigerant pipe 54e and the gas refrigerant connection pipe 52. The liquid-side shutoff valve 37 and the gas-side shutoff valve 38 are valves that are manually opened and closed.

### (2-2-1) Compressor

As illustrated in Fig. 2, the compressor 31 sucks a low-pressure refrigerant from the suction pipe 54a, compresses the refrigerant by a compression mechanism (not illustrated), and discharges the compressed refrigerant to the discharge pipe 54b.

The compressor 31 is, for example, a positive displacement compressor of a rotary type, scroll type, or the like. The compression mechanism of the compressor 31 is driven by a compressor motor 31m. The number of rotations of the compressor motor 31m can be controlled by an inverter.

### (2-2-2) Flow path switching valve

The flow path switching valve 32 is a mechanism that switches the flow path of the refrigerant between a first state and a second state. In the first state, the flow path switching valve 32 makes the suction pipe 54a and the gas refrigerant pipe 54e communicate, and makes the discharge pipe 54b and the gas refrigerant pipe 54c communicate as indicated by a solid line in the flow path switching valve 32 in Fig. 2. In the second state, the flow path switching valve 32 makes the suction pipe 54a and the gas refrigerant pipe 54c communicate, and makes the discharge pipe 54b and the gas refrigerant pipe 53e communicate as indicated by a broken line in the flow path switching valve 32 in Fig. 2.

The flow path switching valve 32 sets the flow path of the refrigerant to the first state during the cooling operation. In this state, the refrigerant discharged from the compressor 31 flows through the outdoor heat exchanger 33, the outdoor expansion valve 34, the indoor expansion valves 23a to 23c, and the indoor heat exchangers 21a to 21c in this order in the refrigerant circuit 50, and returns to the compressor 31. In the first state, the outdoor heat exchanger 33 functions as a condenser, and the indoor heat exchangers 21a to 21c function as evaporators.

The flow path switching valve 32 sets the flow path of the refrigerant to the second state during the heating operation. In this state, the refrigerant discharged from the compressor 31 flows through the indoor heat exchangers 21a to 21c, the indoor expansion valves 23a to 23c, the outdoor expansion valve 34, and the outdoor heat exchanger 33 in this order in the refrigerant circuit 50, and returns to the compressor 31. In the second state, the outdoor heat exchanger 33 functions as an evaporator, and the indoor heat exchangers 21a to 21c function as condensers.

### (2-2-3) Outdoor heat exchanger

The outdoor heat exchanger 33 implements heat exchange between the refrigerant flowing through the outdoor heat exchanger 33 and the air outside the building BL. The outdoor heat exchanger 33 is, for example, a fin-and-tube heat exchanger including a plurality of heat transfer fins and a plurality of heat transfer tubes. As illustrated in Fig. 2, one end of the outdoor heat exchanger 33 is connected to the liquid refrigerant connection pipe 51 via the liquid refrigerant pipe 54d. The other end of the outdoor heat exchanger 33 is connected to the flow path switching valve 32 via the gas refrigerant pipe 54c.

During the cooling operation, the refrigerant flows into the outdoor heat exchanger 33 from the gas refrigerant pipe 54c, and the outdoor heat exchanger 33 functions as a condenser for the refrigerant. During the heating operation, the refrigerant flows into the outdoor heat exchanger 33 from the liquid refrigerant pipe 54d, and the outdoor heat exchanger 33 functions as an evaporator for the refrigerant. Note that, in the present embodiment, the outdoor heat exchanger 33 is a fin-and-tube heat exchanger, but is not limited thereto, and may be other types of heat exchangers.

### (2-2-4) Outdoor expansion valve

The outdoor expansion valve 34 is a mechanism for adjusting the pressure and flow rate of the refrigerant flowing through the liquid refrigerant pipe 54d. As illustrated in Fig. 2, the outdoor expansion valve 34 is provided to the liquid refrigerant pipe 54d. In the present embodiment, the outdoor expansion valve 34 is an electronic expansion valve whose opening degree is adjustable.

### (2-2-5) Accumulator

The accumulator 35 is a container having a gas-liquid separation function of separating an inflowing refrigerant into a gas refrigerant and a liquid refrigerant. As illustrated in Fig. 2, the accumulator 35 is provided to the suction pipe 54a. The refrigerant flowing into the accumulator 35 is separated into a gas refrigerant and a liquid refrigerant, and the gas refrigerant accumulated in the upper space flows into the compressor 31.

### (2-2-6) Outdoor fan

The outdoor fan 36 is a fan that supplies air outside the building BL to the outdoor heat exchanger 33. The outdoor fan 36 is, for example, an axial flow fan such as a propeller fan. As illustrated in Fig. 2, the outdoor fan 36 is driven by an outdoor fan motor 36m including a DC fan motor and the like. The number of rotations of the outdoor fan motor 36m can be controlled by an inverter.

### (2-2-7) Sensor

The outdoor heat-exchange temperature sensor 66 measures the temperature of the refrigerant flowing through the outdoor heat exchanger 33. The outdoor heat-exchange temperature sensor 66 is provided to the outdoor heat exchanger 33.

The suction pressure sensor 68 is a sensor that measures the suction pressure of the compressor 31. The suction pressure sensor 68 is provided to the suction pipe 54a. The suction pressure is a refrigerant pressure corresponding to an evaporation pressure during the cooling operation.

The discharge pressure sensor 69 is a sensor that measures the discharge pressure of the compressor 31. The discharge pressure sensor 69 is provided to the discharge pipe 54b. The discharge pressure is a refrigerant pressure corresponding to the condensation pressure during the heating operation.

### (2-2-8) Outdoor control unit

The outdoor control unit 39 controls the operation of each of the units forming the outdoor unit 30.

The outdoor control unit 39 is electrically connected to the various devices of the outdoor unit 30, including the compressor motor 31m, the flow path switching valve 32, the outdoor expansion valve 34, and the outdoor fan motor 36m. The outdoor control unit 39 is communicably connected to various sensors provided in the outdoor unit 30, including the outdoor heat-exchange temperature sensor 66, the suction pressure sensor 68, and the discharge pressure sensor 69.

The outdoor control unit 39 includes a control calculation device and a storage device. The control calculation device is a processor such as a CPU or a GPU. The storage device is a storage medium such as a RAM, a ROM, or a flash memory. The control calculation device reads the program stored in the storage device and executes predetermined calculation processing in accordance with the program, thereby controlling the operation of each of the units forming the outdoor unit 30. In addition, the control calculation device can write calculation results to the storage device and read information stored in the storage device in accordance with the program. Further, the outdoor control unit 39 includes a timer.

The outdoor control unit 39 exchanges control signals, measurement signals, signals related to various settings, and the like with the indoor control units 29a to 29c of the indoor units 20a to 20c via the communication line 80. The outdoor control unit 39 and the indoor control units 29a to 29c cooperate to function as the controller 40. The function of the controller 40 will be described below.

### (2-3) Controller

The controller 40 includes the indoor control units 29a to 29c and the outdoor control unit 39. The controller 40 controls the operation of the entire air conditioner 2 by causing the respective control calculation devices of the indoor control units 29a to 29c and the outdoor control unit 39 to execute programs stored in the respective storage devices. Note that the air conditioner 2 may include, as the controller 40, a centralized controller (so-called edge) that centrally controls the indoor units 20a to 20c and the outdoor unit 30.

Fig. 3 is a control block diagram of the air conditioner 2. As illustrated in Fig. 3, the controller 40 is communicably connected to the indoor suction temperature sensors 61a to 61c, the indoor heat exchange temperature sensors 62a to 62c, the gas-side temperature sensors 64a to 64c, the liquid-side temperature sensors 67a to 67c, the outdoor heat-exchange temperature sensor 66, the suction pressure sensor 68, and the discharge pressure sensor 69. The controller 40 is also electrically connected to the indoor expansion valves 23a to 23c, the indoor fan motors 22am to 22cm, the compressor motor 31m, the flow path switching valve 32, the outdoor expansion valve 34, and the outdoor fan motor 36m. Further, the controller 40 is communicably connected to a thermal load prediction device 3 via the network NW. The controller 40 controls operations of various devices of the air conditioner 2 based on a control signal received from the operation remote controller via the indoor units 20a to 20c, a control signal received from the thermal load prediction device 3, measurement signals of various sensors, and the like.

The controller 40 mainly performs the cooling operation and the heating operation. The controller 40 mainly has a data transmission function.

### (2-3-1) Cooling operation

Now, a case where the controller 40 causes the indoor unit 20a to perform the cooling operation will be described.

The controller 40 switches the flow path switching valve 32 to the first state, for example, upon receiving an instruction to perform the cooling operation from the operation remote controller via the indoor unit 20a. Then, the controller 40 adjusts the number of rotations of the compressor 31, the temperature of the refrigerant flowing through the outdoor heat exchanger 33 (the temperature measured by the outdoor heat-exchange temperature sensor 66), the opening degree of the outdoor expansion valve 34, the opening degree of the indoor expansion valve 23a, and the like so that the indoor refrigerant temperature becomes the target refrigerant temperature. Here, the indoor refrigerant temperature means an indoor saturation temperature (an indoor evaporation temperature during cooling operation) and a degree of superheating. In the present embodiment, the indoor evaporation temperature is a measured value of the indoor heat exchange temperature sensor 62a. Alternatively, the indoor evaporation temperature may be calculated from the suction pressure. The degree of superheating is calculated by subtracting the indoor evaporation temperature or the indoor liquid-side temperature from the indoor gas-side temperature. The target refrigerant temperature is set to a temperature corresponding to a set temperature received from the operation remote controller or a target refrigerant temperature received from the thermal load prediction device 3. The controller 40 may set the target refrigerant temperature to, for example, a temperature most recently received from the operation remote controller or the thermal load prediction device 3.

By controlling the operations of the various devices as described above, the refrigerant flows through the refrigerant circuit 50 as follows during the cooling operation.

When the compressor 31 is activated, low-pressure gas refrigerant is sucked into the compressor 31 and compressed by the compressor 31 to become high-pressure gas refrigerant. The high-pressure gas refrigerant is sent to the outdoor heat exchanger 33 via the flow path switching valve 32, exchanges heat with the air outside the building BL supplied by the outdoor fan 36, condenses, and becomes high-pressure liquid refrigerant. The high-pressure liquid refrigerant flows through the liquid refrigerant pipe 54d and passes through the outdoor expansion valve 34. The high-pressure liquid refrigerant sent to the indoor unit 20a is depressurized to have a pressure close to the suction pressure of the compressor 31 in the indoor expansion valve 23a to be a gas-liquid two-phase refrigerant, and is sent to the indoor heat exchanger 21a. The gas-liquid two-phase refrigerant is evaporated in the indoor heat exchanger 21a by exchanging heat with the air, in the air-conditioning zone Z1, supplied to the indoor heat exchanger 21a by the indoor fan 22a, to be low-pressure gas refrigerant. The low-pressure gas refrigerant is sent to the outdoor unit 30 via the gas refrigerant connection pipe 52, and flows into the accumulator 35 via the flow path switching valve 32. The low-pressure gas refrigerant that has flowed into the accumulator 35 is again sucked into the compressor 31. The temperature of the air supplied to the indoor heat exchanger 21a is lowered through heat exchange with the refrigerant flowing through the indoor heat exchanger 21a, and the air cooled by the indoor heat exchanger 21a is blown out to the air-conditioning zone Z1.

### (2-3-2) Heating operation

Here, a case where the controller 40 causes the indoor unit 20a to perform the heating operation will be described.

The controller 40 switches the flow path switching valve 32 to the second state, for example, upon receiving an instruction to perform the heating operation from the operation remote controller via the indoor unit 20a. Then, the controller 40 adjusts the number of rotations of the compressor 31, the temperature of the refrigerant flowing through the outdoor heat exchanger 33, the opening degree of the outdoor expansion valve 34, the opening degree of the indoor expansion valve 23a, and the like so that the indoor refrigerant temperature becomes the target refrigerant temperature. Here, the indoor refrigerant temperature means the indoor condensation temperature (the indoor condensation temperature during the heating operation) and the degree of subcooling. In the present embodiment, the indoor condensation temperature is a measured value of the indoor heat exchange temperature sensor 62a. Alternatively, the indoor condensation temperature may be calculated from the discharge pressure. The degree of subcooling is calculated by subtracting the indoor liquid-side temperature from the indoor condensation temperature or the indoor gas-side temperature. The target refrigerant temperature is set to a temperature corresponding to a set temperature received from the operation remote controller or a target refrigerant temperature received from the thermal load prediction device 3. The controller 40 may set the target refrigerant temperature to, for example, a temperature most recently received from the operation remote controller or the thermal load prediction device 3.

By controlling the operations of the various devices as described above, the refrigerant flows through the refrigerant circuit 50 as follows during the heating operation.

When the compressor 31 is activated, low-pressure gas refrigerant is sucked into the compressor 31 and compressed by the compressor 31 to become high-pressure gas refrigerant. The high-pressure gas refrigerant is sent to the indoor heat exchanger 21a via the flow path switching valve 32, and is condensed by exchanging heat with the air, in the air-conditioning zone Z1, supplied to the indoor heat exchanger 21a by the indoor fan 22a, to be high-pressure liquid refrigerant. The temperature of the air supplied to the indoor heat exchanger 21a is raised through heat exchange with the refrigerant flowing through the indoor heat exchanger 21a, and the air heated by the indoor heat exchanger 21a is blown out to the air-conditioning zone Z1. The high-pressure liquid refrigerant that has passed through the indoor heat exchanger 21a is decompressed in the indoor expansion valve 23a. The decompressed liquid refrigerant is sent to the outdoor unit 30 via the liquid refrigerant connection pipe 51, and flows into the liquid refrigerant pipe 54d. The refrigerant flowing through the liquid refrigerant pipe 54d is decompressed by the outdoor expansion valve 34 to a pressure close to the suction pressure of the compressor 31, becomes a gas-liquid two-phase refrigerant, and flows into the outdoor heat exchanger 33. The low-pressure gas-liquid two-phase refrigerant that has flowed into the outdoor heat exchanger 33 exchanges heat with the air outside the building BL supplied by the outdoor fan 36, evaporates, and becomes low-pressure gas refrigerant. The low-pressure gas refrigerant flows into the accumulator 35 via the flow path switching valve 32. The low-pressure gas refrigerant that has flowed into the accumulator 35 is again sucked into the compressor 31.

### (2-3-3) Data transmission function

The controller 40 transmits operation data D3 of the air conditioner 2 to the thermal load prediction device 3.

In the present embodiment, the controller 40 transmits the indoor suction temperature, the air volume, and the indoor refrigerant temperature (the indoor saturation temperature and the degree of superheating or degree of subcooling) of the indoor units 20a to 20c to the thermal load prediction device 3 as the operation data D3 of the air conditioner 2.

In the present embodiment, the controller 40 acquires the indoor suction temperature of the indoor units 20a to 20c from the indoor suction temperature sensors 61a to 61c. In addition, the controller 40 acquires the air volume of the indoor units 20a to 20c based on the number of rotations of the indoor fan motors 22am to 22cm. Further, the controller 40 acquires the indoor saturation temperatures of the indoor units 20a to 20c from the indoor heat exchange temperature sensors 62a to 62c. The indoor saturation temperature may be calculated from the suction pressure or the discharge pressure. Further, the controller 40 calculates the degree of superheating by subtracting the indoor evaporation temperature or the indoor liquid-side temperature from the indoor gas-side temperature. Further, the controller 40 calculates the degree of subcooling by subtracting the indoor liquid-side temperature from the indoor condensation temperature or the indoor gas-side temperature.

In the present embodiment, the controller 40 acquires the operation data D3 of the air conditioner 2 once in every 10 minutes and transmits the operation data D3 to the thermal load prediction device 3.

### (2-4) Thermal load prediction device

The thermal load prediction device 3 is a computer on a cloud. Fig. 4 is a control block diagram of the thermal load prediction device 3. As illustrated in Fig. 4, the thermal load prediction device 3 mainly includes a storage unit 11, an input unit 12, a display unit 13, a communication unit 14, and a control unit 19.

### (2-4-1) Storage unit

The storage unit 11 is a storage device such as a RAM, a ROM, and an HDD. The storage unit 11 stores a program executed by the control unit 19, data necessary for the execution of the program, and the like.

In the present embodiment, the storage unit 11 particularly stores external environmental data D1 and internal environmental data D2 acquired by an environmental data acquisition unit 191 to be described below, and the operation data D3 acquired by an operation data acquisition unit 192.

### (2-4-2) Input unit

The input unit 12 is a keyboard and a mouse. Various commands to the thermal load prediction device 3 and various types of information can be input using the input unit 12.

### (2-4-3) Display unit

The display unit 13 is a monitor. The display unit 13 can display various types of data and the like stored in the storage unit 11.

### (2-4-4) Communication unit

The communication unit 14 is a network interface device for communicating with the air conditioner 2 and the like via the network NW.

### (2-4-5) Control unit

The control unit 19 is a processor such as a CPU or a GPU. The control unit 19 reads and executes a program stored in the storage unit 11 to realize various functions of the thermal load prediction device 3. In addition, according to a program, the control unit 19 can write a calculation result in the storage unit 11 or read information stored in the storage unit 11.

As illustrated in Fig. 4, the control unit 19 includes, as functional blocks, the environmental data acquisition unit 191, the operation data acquisition unit 192, a learning unit 193, a prediction unit 194, a determination unit 195, and a transmission unit 196.

### (2-4-5-1) Environmental data acquisition unit

The environmental data acquisition unit 191 acquires the external environmental data D1 related to the environment outside the building BL and the internal environmental data D2 related to the environment inside the building BL, both of which affect the thermal load of the air-conditioning zones Z1 and Z2.

The external environmental data D1 includes at least the outside air temperature of the building BL. In the present embodiment, the external environmental data D1 is an outside air temperature of the building BL. The environmental data acquisition unit 191 acquires the outside air temperature of the building BL from the outdoor temperature sensor 65.

The internal environmental data D2 includes at least the indoor temperature of the air-conditioning zones Z1 and Z2. In the present embodiment, the internal environmental data D2 is the indoor temperature of the air-conditioning zones Z1 and Z2. The environmental data acquisition unit 191 acquires the indoor temperature of the air-conditioning zones Z1 and Z2 from the indoor temperature sensors 631 and 632.

In the present embodiment, the environmental data acquisition unit 191 acquires the external environmental data D1 and the internal environmental data D2 once in every 10 minutes.

The external environmental data D1 and the internal environmental data D2 are used as learning data LD1 and LD2 described below.

### (2-4-5-2) Operation data acquisition unit

The operation data acquisition unit 192 acquires the operation data D3 of the air conditioner 2 from the air conditioner 2.

As described above, in the present embodiment, the operation data D3 is the indoor suction temperature, the air volume, and the indoor refrigerant temperature of the indoor units 20a to 20c.

In the present embodiment, the operation data acquisition unit 192 acquires the operation data D3 once in every 10 minutes at the same timing as the acquisition of the external environmental data D1 and the internal environmental data D2 by the environmental data acquisition unit 191.

The operation data D3 is used as the learning data LD1 and LD2 described below.

### (2-4-5-3) Learning unit

The learning unit 193 uses the learning data LD1 and LD2 obtained from the storage unit 11 to train, for each of the air-conditioning zones Z1 and Z2, of models M1 and M2 for predicting the thermal loads of the air-conditioning zones Z1 and Z2.

The learning data LD1 and LD2 include the external environmental data D1, the internal environmental data D2, and the operation data D3. In the present embodiment, the learning data LD1 for the model M1 is data in which the indoor temperature of the air-conditioning zone Z1 and the outside air temperature of the building BL are associated with the thermal load of the air-conditioning zone Z1. The learning data LD2 for the model M2 for predicting the thermal load of the air-conditioning zone Z2 is data in which the indoor temperature of the air-conditioning zone Z2 and the outside air temperature of the building BL are associated with the thermal load of the air-conditioning zone Z2. In other words, for each of the air-conditioning zones Z1 and Z2, the learning unit 193 trains the models M1 and M2 for predicting the thermal loads of the air-conditioning zones Z1 and Z2 from the indoor temperatures of the air-conditioning zones Z1 and Z2 and the outside air temperature of the building BL.

The learning unit 193 calculates the thermal loads of the air-conditioning zones Z1 and Z2 in the learning data LD1 and LD2 based on the heat exchange amount in each of the indoor units 20a to 20c installed in the air-conditioning zones Z1 and Z2. The learning unit 193 calculates the heat exchange amount in each of the indoor units 20a to 20c based on the operation data D3.

Specifically, first, the learning unit 193 calculates the heat exchange amount in each of the indoor units 20a to 20c from the indoor suction temperature, the air volume, and the indoor refrigerant temperature in each of the indoor units 20a to 20c by using a predetermined relational equation holding among the heat exchange amount, the indoor suction temperature, the air volume, and the indoor refrigerant temperature in each of the indoor units 20a to 20c. Then, the learning unit 193 adds the calculated heat exchange amount in each of the indoor units 20a to 20c for each of the air-conditioning zones Z1 and Z2 in which the indoor units 20a to 20c are installed, and sets the sum as the thermal load of each of the air-conditioning zones Z1 and Z2. For example, the thermal load of the air-conditioning zone Z1 is the sum of the heat exchange amount in the indoor unit 20a and the heat exchange amount in the indoor unit 20b. Further, for example, the thermal load of the air-conditioning zone Z2 is the heat exchange amount in the indoor unit 20c.

Before training the models M1 and M2, the learning unit 193 may exclude records including missing values or abnormal values from the learning data LD1 and LD2 as preprocessing. The learning unit 193 may complement missing values or abnormal values included in the learning data LD1 and LD2 as preprocessing before training the models M1 and M2. The learning unit 193 may process the learning data LD1 and LD2 based on the operating state of the air conditioner 2 or the schedule of the air conditioner 2 as preprocessing before training the models M1 and M2. For example, the learning unit 193 may exclude, from the learning data LD1 and LD2, data of operations (the oil return operation, the defrosting operation, and the like) other than the operation for controlling the indoor temperature (the cooling operation, the heating operation, and the like) , based on the operating state of the air conditioner 2. Based on the schedule of the air conditioner 2, the learning unit 193 may exclude, for example, data such as a time zone in which the air conditioner 2 is stopped or a time zone in which the air conditioner 2 is performing a blowing operation from the learning data LD1 and LD2.

In the present embodiment, the models M1 and M2 are assumed to be a deep learning model. The deep learning model is, for example, a fully connected neural network model. However, the models M1 and M2 may be another machine learning model, may be a statistical model, may be a physical model, or may be a combination of a machine learning model, a statistical model, and a physical model. Further, the models M1 and M2 may be an ensemble model or a gray box model.

In the present embodiment, the learning unit 193 trains (updates) the models M1 and M2 every week by using the learning data LD1 and LD2 for the past one week. The learning unit 193 may perform batch learning or mini-batch learning. Further, the learning unit 193 may train (online training) the models M1 and M2 every time the learning data LD1 and LD2 are acquired.

### (2-4-5-4) Prediction unit

The prediction unit 194 predicts the thermal load of the air-conditioning zones Z1 and Z2 using the models M1 and M2.

In the present embodiment, each time the prediction unit 194 predicts the thermal loads of the air-conditioning zones Z1 and Z2 10 minutes after the acquisition the external environmental data D1, the internal environmental data D2, and the operation data D3, the prediction unit 194 determines a time point when the external environmental data D1, the internal environmental data D2, and the operation data D3 are acquired (hereinafter, referred to as a data acquisition time point). Specifically, the prediction unit 194 predicts the thermal loads of the air-conditioning zones Z1 and Z2 10 minutes after the data acquisition time point by inputting the indoor temperatures of the air-conditioning zones Z1 and Z2 and the outside air temperature of the building BL 10 minutes after the data acquisition time point, to the models M1 and M2.

The indoor temperature 10 minutes after the data acquisition time point is predicted by using, for example, a model trained using previously acquired data in which the previously acquired indoor temperature and the indoor temperature 10 minutes after the previous acquisition are associated with each other. Further, on the assumption that the indoor temperatures of the air-conditioning zones Z1 and Z2 do not change greatly in 10 minutes, the indoor temperatures of the air-conditioning zones Z1 and Z2 acquired most recently may be used as the indoor temperatures of the air-conditioning zones Z1 and Z2 10 minutes after the data acquisition time point.

The outside air temperature 10 minutes after the data acquisition time point is predicted by using, for example, a model trained using previously acquired data in which the outside air temperature is associated with the outside air temperature 10 minutes after the previous acquisition. In addition, on the assumption that the outside air temperature of the building BL does not greatly change in 10 minutes, the most recently acquired outside air temperature of the building BL may be used as the outside air temperature of the building BL 10 minutes after the data acquisition time point.

### (2-4-5-5) Determination unit

The determination unit 195 determines a control target value or a control command value of the air conditioner 2 based on the thermal loads of the air-conditioning zones Z1 and Z2 predicted by the prediction unit 194. In the present embodiment, the control target value or the control command value is a target refrigerant temperature which is a target value of the indoor refrigerant temperature. However, the present invention is not limited thereto, and the control target value or the control command value may include the number of rotations of the compressor 31 or the like for achieving the target refrigerant temperature.

First, the determination unit 195 calculates the thermal load to be processed by each of the indoor units 20a to 20c based on the thermal load of the air-conditioning zones Z1 and Z2 predicted by the prediction unit 194 and the information on the indoor units 20a to 20c installed in the air-conditioning zones Z1 and Z2.

For example, based on the thermal load of the air-conditioning zone Z1 predicted by the prediction unit 194 and the information on the indoor units 20a and 20b installed in the air-conditioning zone Z1, the determination unit 195 performs proportional distribution to the thermal loads to be processed by the respective indoor units 20a and 20b. The information on the indoor units 20a and 20b may be a positional relationship between the indoor units 20a and 20b, may be a characteristic value of the indoor units 20a and 20b, may be an operating condition of the indoor units 20a and 20b, or may be information obtained by combining these.

When the information on the indoor units 20a and 20b is the positional relationship between the indoor units 20a and 20b, the determination unit 195, for example, performs weighting in accordance with whether the positions of the indoor units 20a and 20b are in the perimeter zone or the interior zone, and proportionally distributes the predicted thermal load of the air-conditioning zone Z1 to the thermal loads processed by the indoor units 20a and 20b.

Further, when the information on the indoor units 20a and 20b is the characteristic values of the indoor units 20a and 20b, the determination unit 195, for example, performs weighting in accordance with the magnitudes of the rated capacities of the indoor units 20a and 20b, and proportionally distributes the predicted thermal loads of the air-conditioning zone Z1 to the thermal loads processed by the indoor units 20a and 20b.

Further, when the information on the indoor units 20a and 20b is the operating condition of the indoor units 20a and 20b, the determination unit 195, for example, performs weighting in accordance with the respective heat exchange amounts of the indoor units 20a and 20b calculated most recently, and proportionally distributes the predicted thermal load of the air-conditioning zone Z1 to the thermal loads processed by the indoor units 20a and 20b.

When the information on the indoor units 20a and 20b is information as a combination of the operating condition and the characteristic value of the indoor units 20a and 20b, the determination unit 195, for example, performs weighting in accordance with the magnitude of the rated capacity only for indoor units for which the start/stop state of the operation remote controller is ON, and proportionally distributes the predicted thermal load of the air-conditioning zone Z1 to the thermal loads processed by the indoor units 20a and 20b.

Further, for example, the determination unit 195 calculates the thermal load to be processed by the indoor unit 20c based on the thermal load of the air-conditioning zone Z2 predicted by the prediction unit 194 and information on the indoor unit 20c installed in the air-conditioning zone Z2. For example, when the information on the indoor unit 20c is a characteristic value of the indoor unit 20c, the determination unit 195 determines the predicted thermal load of the air-conditioning zone Z2 as the thermal load processed by the indoor unit 20c within the range of the rated capacity of the indoor unit 20c.

Next, the determination unit 195 calculates a required refrigerant temperature in each of the indoor units 20a to 20c, which is required for each of the indoor units 20a to 20c to process the calculated thermal load. Specifically, the determination unit 195 calculates the required refrigerant temperature (indoor refrigerant temperature) in each of the indoor units 20a to 20c from the calculated thermal load (heat exchange amount), and the indoor suction temperature and the air volume 10 minutes after the data acquisition time point, using a predetermined relational equation holding among the heat exchange amount, the indoor suction temperature, the air volume, and the indoor refrigerant temperature in each of the indoor units 20a to 20c.

The indoor suction temperature 10 minutes after the data acquisition time point is predicted by using, for example, a model trained using previously acquired data in which the indoor suction temperature is associated with the indoor suction temperature after 10 minutes. Further, assuming that the indoor suction temperature does not change greatly in 10 minutes, the indoor suction temperature acquired most recently may be used as the indoor suction temperature 10 minutes after the data acquisition time point. Further, when the indoor units 20a to 20c are in a steady state, assuming that the indoor suction temperature 10 minutes after the data acquisition time point is the most recently acquired set temperature, the most recently acquired set temperature may be used as the indoor suction temperature 10 minutes after the data acquisition time point. In this case, the operation data acquisition unit 192 acquires in advance the set temperatures of the indoor units 20a to 20c as the operation data D3.

The air volume 10 minutes after the data acquisition time point is predicted by using, for example, a model trained using data in which the previously acquired air volume and the air volume 10 minutes after are associated with each other. Further, assuming that the setting of the air volume is not changed in 10 minutes, the most recently acquired air volume may be used as the air volume 10 minutes after the data acquisition time point.

Next, the determination unit 195 determines a target refrigerant temperature of the air conditioner 2 required for bringing the indoor refrigerant temperature in each of the indoor units 20a to 20c closer to the required refrigerant temperature. Here, the target refrigerant temperature of the air conditioner 2 is a target refrigerant temperature common to the indoor units 20a to 20c forming the air conditioner 2. In other words, the determination unit 195 determines the target refrigerant temperature common to the indoor units belonging to the refrigerant system. In the present embodiment, since the indoor units 20a to 20c belong to the same refrigerant system, the determination unit 195 determines the target refrigerant temperature of the air conditioner 2 by aggregating the required refrigerant temperatures in the indoor units 20a to 20c based on, for example, the maximum values, the minimum values, or the average values.

### (2-4-5-6) Transmission unit

The transmission unit 196 transmits the control content including the target refrigerant temperature determined by the determination unit 195 to the air conditioner 2.

In the present embodiment, upon receiving the target refrigerant temperature from the thermal load prediction device 3, the air conditioner 2 sets the received target refrigerant temperature as the target refrigerant temperature in the indoor units 20a to 20c. The air conditioner 2 maintains the set target refrigerant temperature for 10 minutes unless the set temperature or the like is changed using the operation remote controller.

### (3) Processing

An example of processing in the thermal load prediction system 1 will be described with reference to a flowchart in Fig. 5.

As illustrated in step S1, the thermal load prediction device 3 acquires the outside air temperature of the building BL (external environmental data D1) and the indoor temperature of the air-conditioning zones Z1 and Z2 (internal environmental data D2), as well as the indoor suction temperature, air volume, and indoor refrigerant temperature of the indoor units 20a to 20c (operation data D3).

When step S1 ends, as illustrated in step S2, the thermal load prediction device 3 inputs the indoor temperature of the air-conditioning zones Z1 and Z2 and the outside air temperature of the building BL 10 minutes after the data acquisition time point to the models M1 and M2, thereby predicting the thermal loads of the air-conditioning zones Z1 and Z2 10 minutes after the data acquisition time point.

When step S2 ends, as illustrated in step S3, the thermal load prediction device 3 calculates the thermal load to be processed by each of the indoor units 20a to 20c based on the predicted thermal loads of the air-conditioning zones Z1 and Z2 10 minutes after and the information on the indoor units 20a to 20c.

When step S3 ends, as illustrated in step S4, the thermal load prediction device 3 calculates a required refrigerant temperature in the indoor units 20a to 20c, which is required for processing the calculated thermal load.

When step S4 ends, as illustrated in step S5, the thermal load prediction device 3 determines a target refrigerant temperature of the air conditioner 2, which is required to bring the indoor refrigerant temperature in the indoor units 20a to 20c closer to the calculated required refrigerant temperature.

When step S5 ends, as illustrated in step S6, the thermal load prediction device 3 transmits the control content including the determined target refrigerant temperature to the air conditioner 2.

When step S6 ends, as illustrated in step S7, upon receiving the target refrigerant temperature from the thermal load prediction device 3, the air conditioner 2 sets the received target refrigerant temperature as the target refrigerant temperature in the indoor units 20a to 20c. The air conditioner 2 maintains the set target refrigerant temperature for 10 minutes unless the set temperature or the like is changed using the operation remote controller.

When step S7 ends, as illustrated in step S8, the thermal load prediction device 3 determines whether or not one week has elapsed since the previous training (updating) of the models M1 and M2. When one week has elapsed since the previous training (updating) of the models M1 and M2, the processing proceeds to step S9. When one week has not elapsed since the previous learning (updating) of the models M1 and M2, the processing proceeds to step S10.

When the processing proceeds from step S8 to step S9, the thermal load prediction device 3 trains (updates) the models M1 and M2 for predicting the thermal loads of the air-conditioning zones Z1 and Z2 for each of the air-conditioning zones Z1 and Z2, using the learning data LD1 and LD2. In other words, the thermal load prediction device 3 trains (updates) the models M1 and M2 once a week.

When step S9 ends, or when the processing proceeds from step S8 to step S10, the thermal load prediction device 3 waits for 10 minutes.

When step S10 ends, the processing returns to step S1, and the thermal load prediction device 3 acquires the external environmental data D1, the internal environmental data D2, and the operation data D3 again. In other words, the thermal load prediction device 3 acquires the external environmental data D1, the internal environmental data D2, and the operation data D3 once in every 10 minutes.

### (4) Features

(4-1) Conventionally, there has been a technique of learning and predicting a thermal load in a building. However, learning the thermal load for each outdoor unit in a conventional way involves a problem in that it is difficult to predict the thermal load for each air-conditioning zone.

The thermal load prediction system 1 of the present embodiment predicts the thermal loads of the air-conditioning zones Z1 and Z2 in the building BL. The thermal load prediction system 1 includes the environmental data acquisition unit 191, the operation data acquisition unit 192, the storage unit 11, the learning unit 193, and the prediction unit 194. The environmental data acquisition unit 191 acquires the external environmental data D1 related to the environment outside the building BL and the internal environmental data D2 related to the environment inside the building BL, both of which affect the thermal load of the air-conditioning zones Z1 and Z2. The operation data acquisition unit 192 acquires the operation data D3 of the air conditioner 2 configured to perform air conditioning for the air-conditioning zones Z1 and Z2. The storage unit 11 stores data acquired by the environmental data acquisition unit 191 and the operation data acquisition unit 192. The learning unit 193 trains the models M1 and M2 for predicting the thermal load of the air-conditioning zones Z1 and Z2 using the learning data LD1 and LD2 obtained from the storage unit 11. The prediction unit 194 predicts the thermal load of the air-conditioning zones Z1 and Z2 using the models M1 and M2. In the air-conditioning zones Z1 and Z2, the indoor units 20a and 20b and the indoor unit 20c, which form the air conditioner 2, are respectively installed. The thermal loads of the air-conditioning zones Z1 and Z2 in the learning data LD1 and LD2 are calculated based on the heat exchange amount in each of the indoor units 20a to 20c installed in the air-conditioning zones Z1 and Z2. The heat exchange amount in the indoor units 20a to 20c is calculated based on the operation data D3.

In the thermal load prediction system 1, the learning unit 193 trains the models M1 and M2 for predicting the thermal load of the air-conditioning zones Z1 and Z2 using the learning data LD1 and LD2 obtained from the storage unit 11. The prediction unit 194 predicts the thermal load of the air-conditioning zones Z1 and Z2 using the models M1 and M2. The thermal loads of the air-conditioning zones Z1 and Z2 in the learning data LD1 and LD2 are calculated based on the heat exchange amount in each of the indoor units 20a to 20c installed in the air-conditioning zones Z1 and Z2. As a result, the thermal load prediction system 1 can learn and predict the thermal load for each of the air-conditioning zones Z1 and Z2.
(4-2) In the thermal load prediction system 1 of the present embodiment, the external environmental data D1 includes at least the outside air temperature of the building BL. The internal environmental data D2 includes at least the indoor temperature of the air-conditioning zones Z1 and Z2.
(4-3) In the thermal load prediction system 1 of the present embodiment, the learning unit 193 excludes records including missing values or abnormal values from the learning data LD1 and LD2 before training the models M1 and M2.
(4-4) In the thermal load prediction system 1 of the present embodiment, the learning unit 193 complements missing values or abnormal values included in the learning data LD1 and LD2 before training the models M1 and M2.
(4-5) In the thermal load prediction system 1 of the present embodiment, the learning unit 193 processes the learning data LD1 and LD2 based on the operating state of the air conditioner 2 or the schedule of the air conditioner 2 before training the models M1 and M2.

The thermal load prediction system 1 can improve the accuracy of the models M1 and M2 by excluding data that is weakly related to the thermal load of the air-conditioning zones Z1 and Z2 based on the operating state of the air conditioner 2 or the schedule of the air conditioner 2.
(4-6) In the thermal load prediction system 1 of the present embodiment, the models M1 and M2 are machine learning models, statistical models, physical models, or a combination of these.
(4-7) In the thermal load prediction system 1 of the present embodiment, the learning unit 193 trains the models M1 and M2 using the learning data LD1 and LD2 for the past one week (a predetermined unit).
(4-8) In the thermal load prediction system 1 of the present embodiment, the learning unit 193 updates the models M1 and M2 once a week (at a predetermined timing).
(4-9) In the thermal load prediction system 1 of the present embodiment, the heat exchange amount in each of the indoor units 20a to 20c is calculated based on the indoor suction temperature, the air volume, and the indoor refrigerant temperature in each of the indoor units 20a to 20c.
(4-10) The thermal load prediction system 1 of the present embodiment further includes the determination unit 195 and the transmission unit 196. The determination unit 195 determines the target refrigerant temperature of the air conditioner 2 based on the thermal load of the air-conditioning zones Z1 and Z2 predicted by the prediction unit 194. The transmission unit 196 transmits the control content including the target refrigerant temperature determined by the determination unit 195 to the air conditioner 2.

As a result, the thermal load prediction system 1 can perform feedforward control.
(4-11) In the thermal load prediction system 1 of the present embodiment, the determination unit 195 calculates the thermal load to be processed by each of the indoor units 20a to 20c based on the thermal load of the air-conditioning zones Z1 and Z2 predicted by the prediction unit 194 and the information on the indoor units 20a to 20c installed in the air-conditioning zones Z1 and Z2. The determination unit 195 calculates a required refrigerant temperature in each of the indoor units 20a to 20c, which is required for each of the indoor units 20a to 20c to process the calculated thermal load. The determination unit 195 determines a target refrigerant temperature of the air conditioner 2 required for bringing the indoor refrigerant temperature in each of the indoor units 20a to 20c closer to the required refrigerant temperature.
(4-12) In the thermal load prediction system 1 of the present embodiment, the required refrigerant temperature is calculated based on the calculated thermal load (heat exchange amount), the indoor suction temperature, and the air volume in each of the indoor units 20a to 20c.

### (5) Modifications

### (5-1) Modification 1A

In the present embodiment, the indoor temperature of the air-conditioning zones Z1 and Z2 is the measured value of the indoor temperature sensors 631 and 632 installed in the air-conditioning zones Z1 and Z2. Alternatively, the indoor temperature of the air-conditioning zones Z1 and Z2 may be calculated from the indoor suction temperature of the indoor units 20a to 20c. For example, the indoor temperature of the air-conditioning zone Z1 can be an average value of the indoor suction temperatures of the indoor units 20a and 20b. In other words, the indoor temperature of the air-conditioning zone Z1 and the indoor suction temperatures of the indoor units 20a and 20b can be substituted for each other.

### (5-2) Modification 1B

In the present embodiment, the outside air temperature of the building BL is a measured value of the outdoor temperature sensor 65 installed outside the building BL. Alternatively, the outside air temperature of the building BL may be a measured value of an outdoor suction temperature sensor that measures the temperature of air sucked by the outdoor unit 30. In such a case, the outdoor suction temperature sensor is installed in the vicinity of an air suction port of the outdoor unit 30. In other words, the outside air temperature of the building BL and the measured value of the outdoor suction temperature sensor can be substituted for each other.

### (5-3) Modification 1C

In the present embodiment, the thermal load prediction system 1 is applied to the plurality of air-conditioning zones Z1 and Z2 and includes a single refrigerant system. In other words, the thermal load prediction system 1 is applied to a system including a plurality of air-conditioning zones and a single refrigerant system. Alternatively, the thermal load prediction system 1 may be applied to a system including a single air-conditioning zone and a single refrigerant system.

Furthermore, the thermal load prediction system 1 may be applied to a system including a single air-conditioning zone and a plurality of refrigerant systems, or a system including a plurality of air-conditioning zones and a plurality of refrigerant systems. In such a case, the determination unit 195 calculates the thermal load to be processed by the indoor unit based on the thermal load of one or a plurality of air-conditioning zones predicted by the prediction unit 194 and the information on the indoor unit installed in the air-conditioning zone. The determination unit 195 calculates the required refrigerant temperature required for the indoor unit to process the calculated thermal load, and determines the target refrigerant temperature required for bringing the indoor refrigerant temperature in the indoor unit closer to the required refrigerant temperature for each of the plurality of refrigerant systems.

### (5-4) Modification 1D

In the present embodiment, the air conditioner 2 includes the indoor units 20a to 20c and the outdoor unit 30. Alternatively, the air conditioner 2 may further include an outside air processing air conditioner such as a humidity controller or a ventilation device.

For example, as well as the indoor units 20a to 20c, the learning unit 193 calculates the heat exchange amount in the humidity controller or the outside air processing air conditioner using a predetermined relational equation. The learning unit 193 calculates the thermal load of the air-conditioning zones Z1 and Z2 in the learning data LD1 and LD2 by adding up not only the heat exchange amounts in the indoor units 20a to 20c but also the heat exchange amounts in the humidity controller and the outside air processing air conditioner for each of the air-conditioning zones Z1 and Z2. The determination unit 195 proportionally distributes the thermal load of the air-conditioning zones Z1 and Z2 predicted by the prediction unit 194 to, for example, not only the thermal loads processed by the indoor units 20a to 20c but also the thermal loads processed by the humidity controller and the outside air processing air conditioner. As well as the indoor units 20a to 20c, the determination unit 195 determines respective setting values required for the humidity controller and the outside air processing air conditioner to process the calculated thermal load.

### (5-5) Modification 1E

In the present embodiment, the external environmental data D1 is the outside air temperature of the building BL. Alternatively, the external environmental data D1 may further include an amount of solar radiation of the building BL, as well as a weather forecast, an amount of cloud, a wind speed, a wind direction, an amount of precipitation, and the like at the location of the building BL. For example, the environmental data acquisition unit 191 acquires the amount of solar radiation of the building BL from a solar radiation sensor installed outside the building BL. Further, for example, the prediction unit 194 predicts the amount of solar radiation 10 minutes after the data acquisition time point by using a model trained using information such as the previously acquired amount of solar radiation or the representative amount of solar radiation, and information on the weather forecast, the amount of cloud, the wind speed, the wind direction, and the amount of precipitation. In addition, assuming that the amount of solar radiation of the building BL does not largely change in 10 minutes, the amount of solar radiation of the building BL acquired most recently may be used as the amount of solar radiation of the building BL 10 minutes after the data acquisition time point.

In the present embodiment, the internal environmental data D2 is the indoor temperature of the air-conditioning zones Z1 and Z2. However, the internal environmental data D2 may further include the humidity of the air-conditioning zones Z1 and Z2, the CO2 concentration, the amount of solar radiation reaching the window/wall, the indoor temperature of the adjacent air-conditioning zone, the inflow/outflow amount of outside air, and the amount of heat generated by the OA equipment, people, and the lighting, and the like.

### (5-6) Modification 1F

In the present embodiment, the learning data LD1 and LD2 include the external environmental data D1, the internal environmental data D2, and the operation data D3. Alternatively, the thermal load prediction device 3 may further use information on the building BL and information on the air-conditioning zones Z1 and Z2, as the learning data LD1 and LD2.

The information on the building BL is, for example, the address, the latitude and longitude, the usage, the wall thermal transmittance, and the like of the building BL. The information on the air-conditioning zones Z1 and Z2 is, for example, the usage of the air-conditioning zones Z1 and Z2, floor area, window area ratio, the presence or absence of window shades, ventilation type, floor height, wall length, installed equipment (number of ventilation devices installed and the like), window shading coefficient, window thermal transmittance, heat capacity of furniture and the like, and usage status (such as schedule), and the like.

### (5-7) Modification 1G

In the present embodiment, the learning unit 193 trains the models M1 and M2 using the learning data LD1 and LD2 for the air-conditioning zones Z1 and Z2, respectively. However, when the air-conditioning zone Z1 and the air-conditioning zone Z2 are similar in terms of thermal load or the like, the learning unit 193 may train the model M1 using the learning data LD2 for the air-conditioning zone Z2 instead of the learning data LD1 for the air-conditioning zone Z1, for example.

As a result, with the thermal load prediction device 3, learning data can be shared between similar air-conditioning zones.

### (5-8) Modification 1H

In the present embodiment, the learning unit 193 calculates the heat exchange amount in each of the indoor units 20a to 20c from the indoor suction temperature, the air volume, and the indoor refrigerant temperature in each of the indoor units 20a to 20c by using a predetermined relational equation holding among the heat exchange amount, the indoor suction temperature, the air volume, and the indoor refrigerant temperature in each of the indoor units 20a to 20c.

Alternatively, although such a configuration is not part of the present invention, the heat exchange amount in each of the indoor units 20a to 20c may be calculated from the indoor suction temperature, the indoor blow-out temperature, and the air volume in each of the indoor units 20a to 20c using a predetermined relational equation holding among the heat exchange amount, the indoor suction temperature, the indoor blow-out temperature, and the air volume in each of the indoor units 20a to 20c. In this case, the indoor blow-out temperatures of the indoor units 20a to 20c are acquired from indoor blow-out temperature sensors that measure the temperatures of the air blown out from the indoor units 20a to 20c. The indoor blow-out temperature sensors are provided near the air outlets of the indoor units 20a to 20c.

In addition, the learning unit 193 may further add the indoor humidity of the air-conditioning zones Z1 and Z2 to calculate the heat exchange amounts in the respective indoor units 20a to 20c. The indoor humidity of the air-conditioning zones Z1 and Z2 is acquired from, for example, an indoor humidity sensor that measures the humidity of the air taken in by the indoor units 20a to 20c. The indoor humidity sensor is provided in the vicinity of the air inlet of the indoor units 20a to 20c. As a result, the learning unit 193 can more accurately calculate the heat exchange amount in each of the indoor units 20a to 20c.

### (5-9) Modification 1I

In the present embodiment, the determination unit 195 calculates the thermal load to be processed by each of the indoor units 20a to 20c based on the thermal loads of the plurality of air-conditioning zones Z1 and Z2 predicted by the prediction unit 194 and the information on the indoor units 20a to 20c installed in the air-conditioning zones Z1 and Z2. The determination unit 195 calculates the required refrigerant temperature in each of the indoor units 20a to 20c, which is required for each of the indoor units 20a to 20c to process the calculated thermal load, and determines the target refrigerant temperature of the air conditioner 2, which is required to bring the indoor refrigerant temperature in each of the indoor units 20a to 20c closer to the required refrigerant temperature.

Alternatively, when the thermal load prediction system 1 is applied to a system including a plurality of air-conditioning zones and a single refrigerant system (corresponding to the present embodiment) or a single air-conditioning zone and a single refrigerant system, the determination unit 195 may aggregate the thermal loads of one or a plurality of air-conditioning zones predicted by the prediction unit 194 based on the maximum value (maximum thermal load) and determine the target refrigerant temperature of the refrigerant system required for processing the maximum thermal load. The determination unit 195 determines the target refrigerant temperature by using, for example, a predetermined relational equation holding among the heat exchange amount (maximum thermal load), the number of rotations of the compressor, and the target refrigerant temperature. In this case, the operation data acquisition unit 192 acquires in advance the number of rotations of the compressors of the refrigerant system as the operation data D3.

When the thermal load prediction system 1 is applied to a system including a single air-conditioning zone and a plurality of refrigerant systems or a plurality of air-conditioning zones and a plurality of refrigerant systems, the determination unit 195 may calculate the thermal load processed by the indoor unit based on the thermal load of one or a plurality of air-conditioning zones predicted by the prediction unit 194 and the information on the indoor unit installed in the air-conditioning zone, aggregate the calculated thermal loads based on the maximum value (maximum thermal load) for each of the plurality of refrigerant systems, and determine the target refrigerant temperature for each refrigerant system required for processing the aggregated maximum thermal loads for each refrigerant system.

### (5-10) Modification 1J

In the present embodiment, the learning unit 193 calculates the thermal load of the air-conditioning zones Z1 and Z2 in the learning data LD1 and LD2 by adding up the heat exchange amounts in the indoor units 20a to 20c for each of the air-conditioning zones Z1 and Z2. Alternatively, the thermal load of the air-conditioning zones Z1 and Z2 may be calculated based on the distribution of the heat exchange amount in the indoor units 20a to 20c or a value obtained by correcting the heat exchange amount in the indoor units 20a to 20c.

### (5-11) Modification 1K

In the present embodiment, the environmental data acquisition unit 191 acquires the external environmental data D1 and the internal environmental data D2. Alternatively, the environmental data acquisition unit 191 may acquire only one of the external environmental data D1 and the internal environmental data D2.

In this case, for example, the learning unit 193 uses only one of the external environmental data D1 and the internal environmental data D2 as the learning data piece LD1, LD2.

### (5-12) Modification 1L

In the present embodiment, the air conditioner 2 acquires the indoor saturation temperatures of the indoor units 20a to 20c from the indoor heat exchange temperature sensors 62a to 62c, and transmits the temperatures to the thermal load prediction device 3 as the operation data D3. Alternatively, the air conditioner 2 may acquire a suction pressure or a discharge pressure instead of the indoor saturation temperature and transmit the suction pressure or the discharge pressure to the thermal load prediction device 3. The thermal load prediction device 3 calculates the indoor saturation temperature from the suction pressure or discharge pressure acquired.

Further, in the present embodiment, the air conditioner 2 calculates the degree of superheating or the degree of subcooling as the operation data D3, and transmits the degree of superheating or the degree of subcooling to the thermal load prediction device 3. Alternatively, the air conditioner 2 may acquire an indoor gas-side temperature or an indoor liquid-side temperature instead of the degree of superheating or the degree of subcooling, and transmit the acquired temperature to the thermal load prediction device 3. The thermal load prediction device 3 calculates the degree of superheating or the degree of subcooling from the indoor gas-side temperature or indoor liquid-side temperature acquired.

### (5-13) Modification 1M

In the present embodiment, the thermal load prediction device 3 learns the indoor temperature of the air-conditioning zones Z1 and Z2 and the outside air temperature of the building BL at the same time point in association with the thermal load of the air-conditioning zones Z1 and Z2. Alternatively, the thermal load prediction device 3 may learn the indoor temperatures of the air-conditioning zones Z1 and Z2 and the outside air temperature of the building BL at a certain time point and the thermal loads of the air-conditioning zones Z1 and Z2 10 minutes after the time point in association with each other.

As a result, the thermal load prediction device 3 can predict the thermal load of the air-conditioning zones Z1 and Z2 10 minutes after the data acquisition time point using the indoor temperatures of the air-conditioning zones Z1 and Z2 and the outside air temperature of the building BL at the data acquisition time point, without using the indoor temperatures of the air-conditioning zones Z1 and Z2 and the outside air temperature of the building BL 10 minutes after the data acquisition time point.

### (5-14)

While embodiments of the present disclosure have been described above, it should be understood that various changes in mode and detail may be made without departing from the scope of the appended claims.

### REFERENCE SIGNS LIST

1 Thermal load prediction system
2 Air conditioner
11 Storage unit
20a to 20c Indoor unit
191 Environmental data acquisition unit
192 Operation data acquisition unit
193 Learning unit
194 Prediction unit
BL Building
D1 External environmental data
D2 Internal environmental data
D3 Operation data
LD1, LD2 Learning data
M1, M2 Model
Z1, Z2 Air-conditioning zone

### CITATION LIST

### PATENT LITERATURE

PTL 1: Japanese Patent No. 5572799

## Claims

1. A thermal load prediction system (1) configured to predict a thermal load of an air-conditioning zone (Z1, Z2) in a building (BL), the thermal load prediction system comprising:
an environmental data acquisition unit (191) configured to acquire external environmental data (D1) related to an environment outside the building and/or internal environmental data (D2) related to an environment inside the building, both of which affect the thermal load of the air-conditioning zone;
an operation data acquisition unit (192) configured to acquire operation data (D3) of an air conditioner (2) configured to perform air conditioning for the air-conditioning zone;
a storage unit (11) configured to store the data acquired by the environmental data acquisition unit and the operation data acquisition unit;
a learning unit (193) configured to train a model (M1, M2) with which the thermal load of the air-conditioning zone is predicted by using learning data (LD1, LD2) obtained from the storage unit; and
a prediction unit (194) configured to predict the thermal load of the air-conditioning zone by using the model, wherein
an indoor unit (20a to 20c) forming the air conditioner is installed in the air-conditioning zone,
the thermal load of the air-conditioning zone in the learning data is calculated based on a heat exchange amount in the indoor unit installed in the air-conditioning zone, and
the heat exchange amount in the indoor unit is calculated based on the operation data,
**characterized in that**
the heat exchange amount in the indoor unit is calculated based on a suction temperature, an air volume, and a refrigerant temperature in the indoor unit.

2. The thermal load prediction system (1) according to claim 1, wherein
the external environmental data includes at least an outside air temperature of the building, and
the internal environmental data includes at least an indoor temperature of the air-conditioning zone.

3. The thermal load prediction system (1) according to claim 1 or 2, wherein
the learning unit excludes a record including a missing value or an abnormal value from the learning data before training the model.

4. The thermal load prediction system (1) according to claim 1 or 2, wherein
the learning unit complements for a missing value or an abnormal value included in the learning data before training the model.

5. The thermal load prediction system (1) according to any one of claims 1 to 4, wherein
the learning unit processes the learning data based on an operating state of the air conditioner or a schedule of the air conditioner before training the model.

6. The thermal load prediction system (1) according to any one of claims 1 to 5, wherein
the learning unit uses second learning data for a second air-conditioning zone similar to a first air-conditioning zone instead of first learning data for the first air-conditioning zone.

7. The thermal load prediction system (1) according to any one of claims 1 to 6, wherein
the model is a machine learning model, a statistical model, a physical model, or a combination of these.

8. The thermal load prediction system (1) according to any one of claims 1 to 7, wherein
the learning unit trains the model by using the learning data of a predetermined unit.

9. The thermal load prediction system (1) according to any one of claims 1 to 8, wherein
the learning unit updates the model at a predetermined timing.

## Patentansprüche

1. System (1) zur Vorhersage der thermischen Belastung, das konfiguriert ist, eine thermische Belastung einer Klimatisierungszone (Z1, Z2) in einem Gebäude (BL) vorherzusagen, wobei das System zur Vorhersage der thermischen Belastung aufweist:
eine Umgebungsdaten-Erfassungseinheit (191), die konfiguriert ist, externe Umgebungsdaten (D1) bezüglich einer Umgebung außerhalb des Gebäudes und/oder interne Umgebungsdaten (D2) bezüglich einer Umgebung innerhalb des Gebäudes zu erfassen, von denen beide die thermische Belastung der Klimatisierungszone beeinflussen;
eine Betriebsdaten-Erfassungseinheit (192), die konfiguriert ist, Betriebsdaten (D3) einer Klimaanlage (2) zu erfassen, die konfiguriert ist, die Klimatisierung der Klimatisierungszone durchzuführen;
eine Speichereinheit (11), die konfiguriert ist, die von der Umgebungsdaten-Erfassungseinheit und der Betriebsdaten-Erfassungseinheit erfassten Daten zu speichern;
eine Lerneinheit (193), die konfiguriert ist, ein Modell (M1, M2), mit dem die thermische Belastung der Klimatisierungszone vorhergesagt wird, unter Verwendung von aus der Speichereinheit erhaltenen Lerndaten (LD1, LD2) zu trainieren; und
eine Vorhersageeinheit (194), die konfiguriert ist, die thermische Belastung der Klimatisierungszone unter Verwendung des Modells vorherzusagen, wobei
eine Inneneinheit (20a bis 20c), die die Klimaanlage bildet, in der Klimatisierungszone installiert ist,
die thermische Belastung der Klimatisierungszone in den Lerndaten basierend auf einer Wärmetauschmenge in der Inneneinheit berechnet wird, die in der Klimatisierungszone installiert ist, und
die Wärmetauschmenge in der Inneneinheit basierend auf den Betriebsdaten berechnet wird,
**dadurch gekennzeichnet, dass**
die Wärmetauschmenge in der Inneneinheit basierend auf einer Ansaugtemperatur, einem Luftvolumens und einer Kältemitteltemperatur in der Inneneinheit berechnet wird.

2. System (1) zur Vorhersage der thermischen Belastung nach Anspruch 1, wobei die externen Umgebungsdaten mindestens eine Außenlufttemperatur des Gebäudes umfassen und
die interne Umgebungsdaten mindestens eine Raumtemperatur der Klimatisierungszone umfassen.

3. System (1) zur Vorhersage der thermischen Belastung nach Anspruch 1 oder 2, wobei
die Lerneinheit einen Datensatz, der einen fehlenden oder einen anomalen Wert enthält, aus den Lerndaten vor dem Training des Modells ausschließt.

4. System (1) zur Vorhersage der thermischen Belastung nach Anspruch 1 oder 2, wobei
die Lerneinheit einen fehlenden oder einen anomalen Wert, der in den Lerndaten enthalten ist, vor dem Training des Modells ergänzt.

5. System (1) zur Vorhersage der thermischen Belastung nach einem der Ansprüche 1 bis 4, wobei
die Lerneinheit die Lerndaten basierend auf einem Betriebszustand der Klimaanlage oder einem Zeitplan der Klimaanlage vor dem Training des Modells verarbeitet.

6. System (1) zur Vorhersage der thermischen Belastung nach einem der Ansprüche 1 bis 5, wobei
die Lerneinheit zweite Lerndaten für eine zweite Klimatisierungszone, die einer ersten Klimatisierungszone ähnlich ist, anstelle erster Lerndaten für die erste Klimatisierungszone verwendet.

7. System (1) zur Vorhersage der thermischen Belastung nach einem der Ansprüche 1 bis 6, wobei
das Modell ein Modell des maschinellen Lernens, ein statistisches Modell, ein physikalisches Modell oder eine Kombination davon ist.

8. System (1) zur Vorhersage der thermischen Belastung nach einem der Ansprüche 1 bis 7, wobei
die Lerneinheit das Modell unter Verwendung der Lerndaten einer vorbestimmten Einheit trainiert.

9. System (1) zur Vorhersage der thermischen Belastung nach einem der Ansprüche 1 bis 8, wobei
die Lerneinheit das Modell mit einem vorbestimmten Timing aktualisiert.

## Revendications

1. Système de prévision de charge thermique (1) configuré pour prévoir la charge thermique d'une zone de climatisation (Z1, Z2) dans un immeuble (BL), ledit système de prévision de charge thermique comprenant :
une unité d'acquisition de données environnementales (191) configurée pour acquérir des données environnementales extérieures (D1) relatives à l'environnement extérieur de l'immeuble et/ou des données environnementales intérieures (D2) relatives à l'environnement intérieur de l'immeuble, lesquelles affectent toutes deux la charge thermique de la zone de climatisation ;
une unité d'acquisition de données de fonctionnement (192) configurée pour acquérir des données de fonctionnement (D3) d'un climatiseur (2) configuré pour assurer la climatisation de la zone de climatisation ;
une unité de stockage (11) configurée pour mémoriser les données acquises par l'unité d'acquisition de données environnementales et l'unité d'acquisition de données de fonctionnement ;
une unité d'apprentissage (193) configurée pour entraîner un modèle (M1, M2) au moyen duquel la charge thermique de la zone de climatisation est prévue au moyen de données d'apprentissage (LD1, LD2) obtenues de l'unité de stockage ; et
une unité de prévision (194) configurée pour prévoir la charge thermique de la zone de climatisation au moyen du modèle, où
une unité intérieure (20a à 20c) constituant le climatiseur est installée dans la zone de climatisation,
la charge thermique de la zone de climatisation dans les données d'apprentissage est calculée sur la base d'une valeur d'échange thermique dans l'unité intérieure installée dans la zone de climatisation, et
la valeur d'échange thermique dans l'unité intérieure est calculée sur la base des données de fonctionnement,
**caractérisé en ce que**
la valeur d'échange thermique dans l'unité intérieure est calculée sur la base d'une température d'aspiration, d'un volume d'air et d'une température de fluide frigorigène dans l'unité intérieure.

2. Système de prévision de charge thermique (1) selon la revendication 1, où
les données environnementales extérieures comprennent au moins une température d'air extérieur de l'immeuble, et
les données environnementales intérieures comprennent au moins une température intérieure de la zone de climatisation.

3. Système de prévision de la charge thermique (1) selon la revendication 1 ou la revendication 2, où
l'unité d'apprentissage exclut des données d'apprentissage un enregistrement comprenant une valeur manquante ou une valeur anormale avant l'entraînement du modèle.

4. Système de prévision de la charge thermique (1) selon la revendication 1 ou la revendication 2, où
l'unité d'apprentissage complète une valeur manquante ou anormale comprise dans les données d'apprentissage avant l'entraînement du modèle.

5. Système de prévision de charge thermique (1) selon l'une des revendications 1 à 4, où
l'unité d'apprentissage traite les données d'apprentissage sur la base d'un état de fonctionnement du climatiseur ou d'un programme du climatiseur avant l'entraînement du modèle.

6. Système de prévision de charge thermique (1) selon l'une des revendications 1 à 5, où
l'unité d'apprentissage exploite des deuxièmes données d'apprentissage relatives à une deuxième zone de climatisation similaire à une première zone de climatisation, au lieu de premières données d'apprentissage relatives à la première zone de climatisation.

7. Système de prévision de charge thermique (1) selon l'une des revendications 1 à 6, où
le modèle est un modèle d'apprentissage automatique, un modèle statistique, un modèle physique ou une combinaison de ceux-ci.

8. Système de prévision de charge thermique (1) selon l'une des revendications 1 à 7, où
l'unité d'apprentissage entraîne le modèle au moyen des données d'apprentissage d'une unité prédéterminée.

9. Système de prévision de charge thermique (1) selon l'une des revendications 1 à 8, où
l'unité d'apprentissage met à jour le modèle suivant une temporisation prédéterminée.
